# EUROPEAN PATENT APPLICATION

(11) **EP 3 588 809 A1**
(43) Date of publication of application: **01.01.2020**
(21) Application number: 17897498.6
(22) Date of filing: 20.12.2017
(51) Int. Cl.: H04B 10/291, H04J 14/02

(54) **OPTICAL RELAY SYSTEM**

(30) Priority: 22.02.2017 JP 2017030786
(71) Applicant: NEC Corporation, Tokyo 108-8001 (JP)
(72) Inventor: INADA Koji, Tokyo 108-8001 (JP)
(74) Representative: Betten & Resch
(86) International application number: PCT/JP2017/045762
(87) International publication number: WO 2018/154947

(57) **Abstract**

An optical relay system capable of increasing the number of optical fibers is provided. An optical relay system (10) according to the present invention includes a first repeater (11) including a first optical coupler (111) configured to divide an optical signal into an optical signal in a first wavelength band and an optical signal in a second wavelength band, a joint box (13) connected to the first repeater (11) and including a first equalizing filter (131) configured to equalize the optical signal in the first wavelength band and a second equalizing filter (132) configured to equalize the optical signal in the second wavelength band, and a second repeater (12) connected to the joint box (13) and including a second optical coupler (121) configured to multiplex the equalized optical signal in the first wavelength band and the equalized optical signal in the second wavelength band.

## Description

### Technical Field

The present invention relates to an optical relay system and, in particular, an optical relay system capable of increasing the number of optical fibers.

### Background Art

In recent years, long-distance transmissions using optical cables that enable high-speed and large-capacity communication have been increasingly performed. In such optical communication using optical cables, the long-distance optical transmission is realized by amplifying optical signals that are attenuated because of the optical transmission by using optical repeaters. However, in an optical wavelength multiplex technique, which is one of techniques for realizing the large-capacity communication, the gain of the optical repeater differs depending on the wavelength, causing a difference in the strength of the optical signal among different wavelengths. Accordingly, in some cases, an optical gain equalizing filter that decreases the deviation of the gain of the optical signal is incorporated in a joint box that connects an optical repeater with another optical repeater.

When optical cables are laid on the bottom of the sea, optical repeaters and joint boxes are also laid on the bottom of the sea. However, if the diameters of the optical repeaters and the joint boxes are large, they may not be buried at a sufficient depth. Therefore, it is desired to reduce the size of the joint box. Further, it is also desired to reduce the size of the joint box in order to reduce the wave resistance of the optical cable and the load caused by the water pressure on the optical cable. The joint box includes an optical coupler that divides (e.g., de-multiplexes) an optical signal into different wavelengths, an optical gain equalizing filter that equalizes the strength of the optical signal over the different wavelengths, and another optical coupler that re-multiplexes (i.e., re-combines) the divided optical signal. When the size of the joint box is restricted in order to downsize the joint box, the number of optical devices such as optical couplers and optical gain equalizing filters disposed in the joint box is limited. As a result, there is a problem that the number of optical fibers connected to the optical devices is limited, making it difficult to perform high-speed and large-capacity communication.

Patent Literature 1 discloses that in an optical submarine relay apparatus, electric circuits including a circuit that generates excitation light and a surge protection circuit are disposed in a housing constructed as a joint box. Further, it discloses that an optical circuit through which an optical signal passes is disposed in another housing constructed as a joint box. Further, it discloses that a 3dB coupler, a WDM coupler, and an erbium-doped fiber are arranged as an optical circuit. However, Patent Literature 1 does not disclose disposing an optical gain equalizing filter. Note that the optical gain equalizing filter may also be referred to as an equalizing filter.

Patent Literature 2 discloses that optical gain equalizers having equalizing characteristics optimal for respective optical fibers in regard to the deviation of the gain of an optical amplifier, and transmission characteristics of an optical submarine cable and the environment in which the optical submarine cable is laid are disposed inside an optical component container for the optical submarine cable. However, Patent Literature 2 does not disclose disposing of an optical coupler necessary for the wavelength multiplexing technique. Note that the optical gain equalizer may also be referred to as an equalizing filter.

### Citation List

### Patent Literature

Patent Literature 1: Japanese Unexamined Patent Application Publication No. 2014-146881
Patent Literature 2: Japanese Unexamined Patent Application Publication No. 2005-215413

### Summary of Invention

### Technical Problem

As described above, there is a problem that when the number of optical devices disposed in a joint box is restricted in order to downsize the joint box, it is difficult to increase the number of optical fibers connected to the optical devices.

The present invention has been made in order to solve the above-described problem and an object thereof is to provide an optical relay system capable of increasing the number of optical fibers.

### Solution to Problem

An optical relay system according to the present invention includes:
a first repeater including a first optical coupler configured to divide an optical signal into an optical signal in a first wavelength band and an optical signal in a second wavelength band;
a joint box connected to the first repeater and including a first equalizing filter configured to equalize the optical signal in the first wavelength band and a second equalizing filter configured to equalize the optical signal in the second wavelength band; and
a second repeater connected to the joint box and including a second optical coupler configured to multiplex the equalized optical signal in the first wavelength band and the equalized optical signal in the second wavelength band.

An optical relay system according to the present invention includes:
a first repeater including a first optical coupler configured to divide an optical signal into an optical signal in a first wavelength band and an optical signal in a second wavelength band;
a joint box connected to the first repeater and including a first attenuator configured to attenuate the optical signal in the first wavelength band and a second attenuator configured to attenuate the optical signal in the second wavelength band; and
a second repeater connected to the joint box and including a second optical coupler configured to multiplex the attenuated optical signal in the first wavelength band and the attenuated optical signal in the second wavelength band.

### Advantageous Effects of Invention

According to the present invention, it is possible to provide an optical relay system capable of increasing the number of optical fibers.

### Brief Description of Drawings

Fig. 1 is a block diagram showing an example of an optical relay system according to a first example embodiment;
Fig. 2A is a schematic diagram showing an example of an optical signal at a point P1 shown in Fig. 1;
Fig. 2B is a schematic diagram showing an example of an optical signal at a point P2 shown in Fig. 1;
Fig. 2C is a schematic diagram showing an example of an optical signal at a point P3 shown in Fig. 1;
Fig. 2D is a schematic diagram showing an example of an optical signal at a point P4 shown in Fig. 1;
Fig. 2E is a schematic diagram showing an example of an optical signal at a point P5 shown in Fig. 1;
Fig. 2F is a schematic diagram showing an example of an optical signal at a point P6 shown in Fig. 1;
Fig. 3 is a block diagram showing an example of an optical relay system according to the first example embodiment;
Fig. 4 is a block diagram showing an example of an optical relay system according to a comparative example;
Fig. 5 is a block diagram showing an example of an optical relay system according to a second embodiment; and
Fig. 6 is a block diagram showing an example of an optical relay system according to a third embodiment.

### Description of Embodiments

Example embodiments according to the present invention will be described hereinafter with reference to the drawings. The same or corresponding elements are denoted by the same symbols throughout the drawings, and duplicated explanations are omitted as necessary for the sake of clarity.

### [First Example Embodiment]

A configuration of an optical relay system according a first example embodiment is described.

In the first example embodiment, the following optical submarine communication system is described as an example, i.e., an optical submarine communication system which is laid on the bottom of the sea in order to relay optical signals such as signals of telephone lines, and in which an optical signal in which a C-band and an L-band are wavelength-multiplexed is divided (e.g., de-multiplexed), equalized, and multiplexed. Further, in some cases, an optical amplifier that amplifies an optical signal is disposed in the repeater. However, it is omitted in this example.

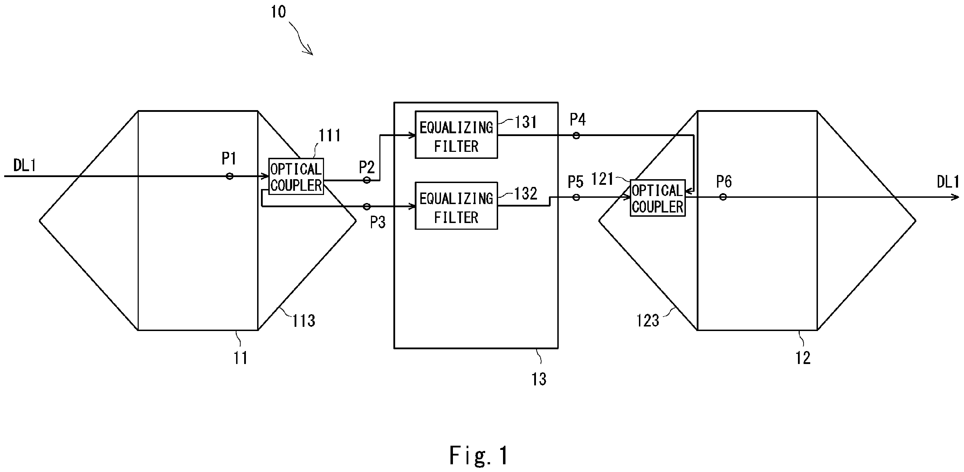

Fig. 1 is a block diagram showing an example of an optical relay system according to a first example embodiment.

Fig. 1 is a block diagram for a downlink DL1 composed of one optical fiber.

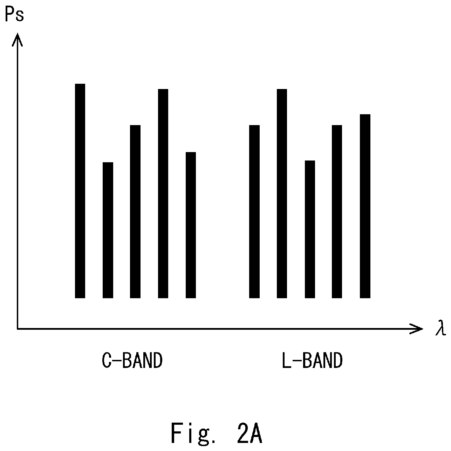

Fig. 2A is a schematic diagram showing an example of an optical signal at a point P1 shown in Fig. 1.

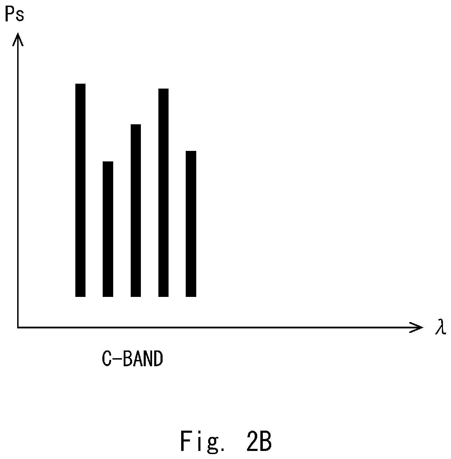

Fig. 2B is a schematic diagram showing an example of an optical signal at a point P2 shown in Fig. 1.

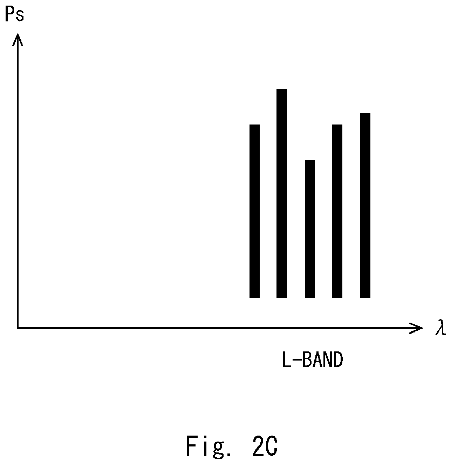

Fig. 2C is a schematic diagram showing an example of an optical signal at a point P3 shown in Fig. 1.

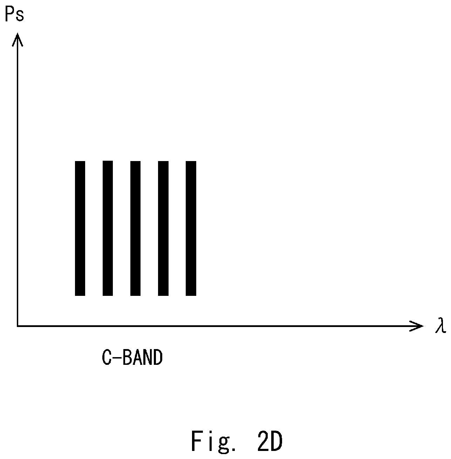

Fig. 2D is a schematic diagram showing an example of an optical signal at a point P4 shown in Fig. 1.

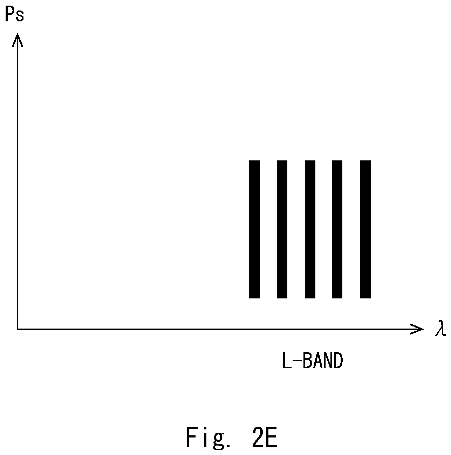

Fig. 2E is a schematic diagram showing an example of an optical signal at a point P5 shown in Fig. 1.

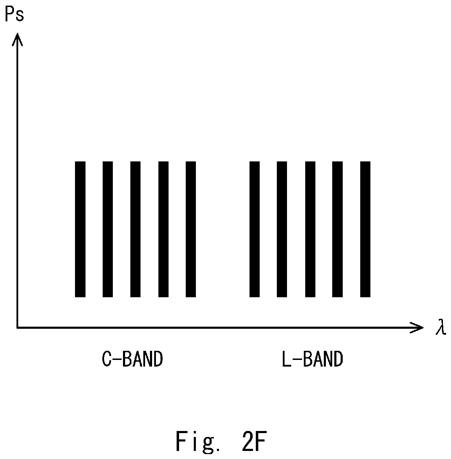

Fig. 2F is a schematic diagram showing an example of an optical signal at a point P6 shown in Fig. 1.

In each of Figs. 2A to 2F, the horizontal axis indicates wavelengths λ and the vertical axis indicates strengths Ps of an optical signal.

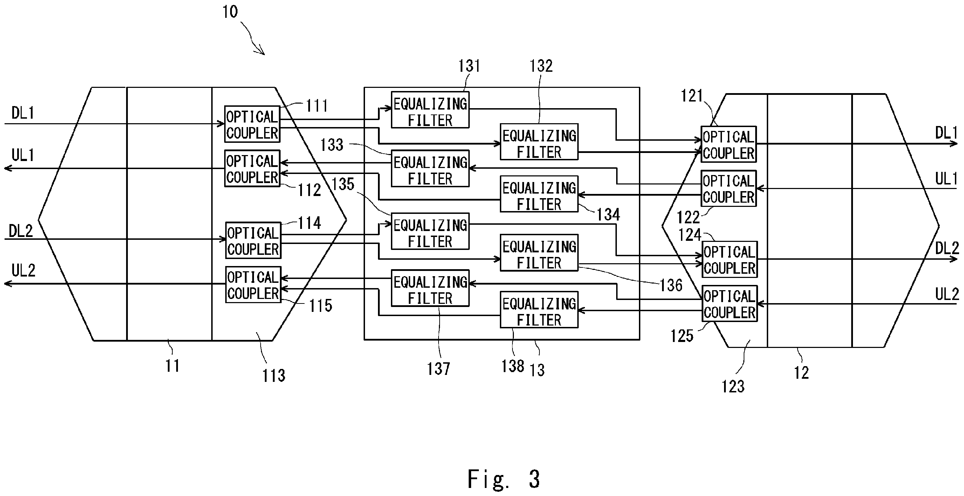

Fig. 3 is a block diagram showing an example of an optical relay system according to the first example embodiment.

Fig. 3 is a block diagram for two optical fibers (downlinks DL1 and DL2) and two optical fibers (uplinks UL1 and UL2).

The downlink DL is described.

As shown in Fig. 1, in the downlink DL1, an optical signal is input to an optical coupler 111 and reaches an optical coupler 121 through an equalizing filter 131.

An optical relay system 10 according to the first example embodiment includes a repeater 11, a repeater 12, and a joint box 13. The repeater 11 includes an optical coupler 111 that divides (e.g., de-multiplexes) an optical signal. Further, the optical coupler 111 is an optical coupler that divides an optical signal into a first wavelength band and a second wavelength band. The first wavelength band is, for example, a C-band and the second wavelength band is, for example, an L-band.

There is a variation (i.e., a difference) between a strength of an optical signal in the C-band and that in the L-band. Therefore, the strength of the optical signal in each of the C- and L-bands is adjusted to a predetermined value by using the equalizing filter.

Specifically, the optical coupler 111 divides an optical signal in which the C- and L-bands are wavelength-multiplexed like the one shown in Fig. 2A into an optical signal in the C-band like the one shown in Fig. 2B and an optical signal in the L-band like the one shown in Fig. 2C.

The joint box 13 is connected to the repeater 11 and includes an equalizing filter 131 and an equalizing filter 132. The equalizing filter 131 equalizes the divided optical signal in the C-band (a first wavelength band) and the equalizing filter 132 equalizes the divided optical signal in the L-band (a second wavelength).

Specifically, the equalizing filter 131 corrects an optical signal having a different optical signal strength for each wavelength (shown in Fig. 2B) to an optical signal having a roughly uniform optical signal strength over the C-band (shown in Fig. 2D). Further, similarly to the equalizing filter 131, the equalizing filter 132 corrects an optical signal like the one shown in Fig. 2C to an optical signal having a roughly uniform optical signal strength over the L-band (shown in Fig. 2E). Note that the joint box 13 may be disposed adjacent to the repeater 11.

The repeater 12 is connected to the joint box 13 and includes an optical coupler 121 that multiplexes the equalized optical signal in the C-band and the equalized optical signal in the L-band. Specifically, the optical coupler 121 multiplexes the optical signal in the C-band like the one shown in Fig. 2D and the optical signal in the L-band like the one shown in Fig. 2E, and outputs a wavelength-multiplexed optical signal like the one shown in Fig. 2F. Note that the joint box 13 may be disposed adjacent to the repeater 12.

Further, the repeater 11 may include a joint ring 113 connected to the joint box 13 and the optical coupler 111 may be disposed inside the joint ring 113. Further, the repeater 12 may include a joint ring 123 connected to the joint box 13 and the optical coupler 121 may be disposed inside the joint ring 123.

Note that the repeater 11 may also be referred to as a first repeater and the repeater 12 may also be referred to as a second repeater. Further, the optical coupler 111 may also be referred to as a first optical coupler and the optical coupler 121 may also be referred to as a second optical coupler. Further, the equalizing filter 131 may also be referred to as a first equalizing filter and the equalizing filter 132 may also be referred to as a second equalizing filter. Further, the joint ring 113 may also be referred to as a first joint ring and the joint ring 123 may also be referred to as a second joint ring.

The uplink UL1 is described.

In Fig. 3, one downlink optical fiber (a downlink DL2) and two uplink optical fibers (uplinks UL1 and UL2) are added compared to the configuration shown in Fig. 1.

As shown in Fig. 3, optical couplers and equalizing filters are arranged in the uplink UL1 so that they correspond to those in the downlink DL1. Further, in the uplink UL1, an optical signal is input to an optical coupler 122 and reaches an optical coupler 112 through an equalizing filter 133 and an equalizing filter 134.

A repeater 12 includes an optical coupler 122 that divides an optical signal inside the joint ring 123. Further, the optical coupler 122 divides an optical signal into a C-band and an L-band.

The joint box 13 includes an equalizing filter 133 and an equalizing filter 134. The equalizing filter 133 equalizes the divided optical signal in the L-band and the equalizing filter 134 equalizes the divided optical signal in the C-band.

The repeater 11 includes an optical coupler 112 that multiplexes the equalized optical signal in the C-band and the equalized optical signal in the L-band inside the joint ring 113.

The optical coupler 122 is disposed inside the joint ring 123 together with the optical coupler 121. The equalizing filters 133 and 134 are disposed inside the joint box 13 together with the equalizing filters 131 and 132. The optical coupler 112 is disposed inside the joint ring 113 together with the optical coupler 111.

In the downlink DL1, only the equalizing filters 131 and 132 are disposed in the joint box 13 in the optical relay system 10. Further, the optical coupler 111 is disposed in the joint ring 113 of the repeater 11 and the optical coupler 121 is disposed in the joint ring 123 of the repeater 12. As described above, the optical devices such as the optical couplers and the equalizing filters are disposed in the joint box and the repeater in a distributed manner.

As a result, it is possible to dispose, among the optical devices necessary for equalizing the gain of the wavelength-multiplexed optical signal, the optical couplers 111 and 121 outside the joint box 13. Further, the number of optical devices disposed in the joint box 13 can be reduced to two, thus making it possible to simplify the disposing (e.g., the arrangement) of the optical devices and the routing of the optical fibers.

The uplink UL1 can be configured in a manner similar to that of the downlink DL1. That is, in the uplink UL1, only the equalizing filters 133 and 134 are disposed in the joint box 13. Further, the optical coupler 122 is disposed in the joint ring 123 and the optical coupler 112 is disposed in the joint ring 113.

An optical fiber composed of one optical fiber in the downlink DL1 and one optical fiber in the uplink UL1 is referred to as one pair of optical fibers (or one optical fiber pair). The number of optical devices necessary for one optical fiber pair, i.e., the number of optical devices required in the downlink DL1 and the uplink UL1 is as follows. That is, four joint boxes 13, two joint rings 113, and two joint rings 123 are required for one optical fiber pair. The four optical devices in the joint box 13 are the equalizing filters 131 to 134, and the two optical devices of the joint ring 113 are optical couplers 111 and 112. Further, the two optical devices of the joint ring 123 are optical couplers 121 and 122.

Note that the downlink DL2 is similar to the downlink DL1 and the uplink UL2 is similar to the uplink UL1. Therefore, their detailed descriptions are omitted.

### [Comparative Example]

A comparative example of first example embodiment is described.

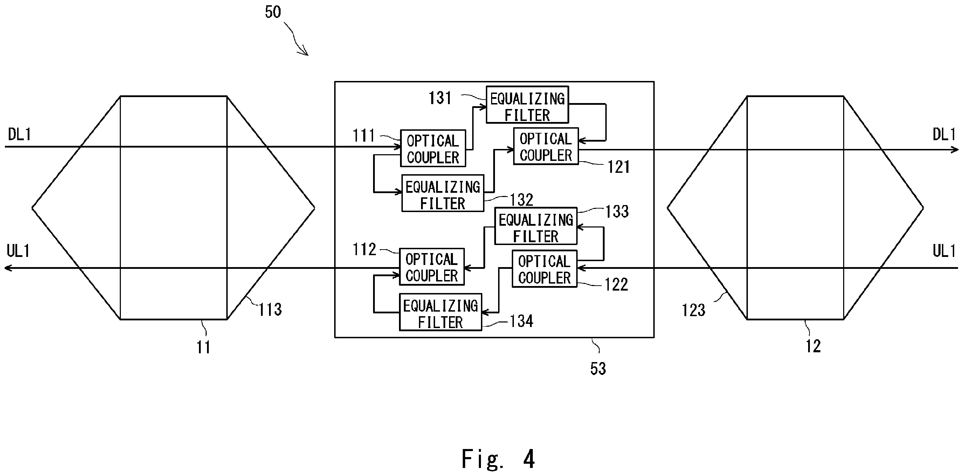

Fig. 4 is a block diagram showing an example of an optical relay system according to a comparative example.

As shown in Fig. 4, an optical relay system 50 according to the comparative example differs from the optical relay system 10, in which one optical fiber pair is implemented, because the optical couplers 111, 112, 121 and 122 are disposed in a joint box 53. That is, the optical couplers 111 and 112 are not disposed in the joint ring 113 but are disposed in the joint box 53. Further, the optical couplers 121 and 122 are not disposed in the joint ring 123 but are disposed in the joint box 53. As a result, the number of optical devices disposed in the joint box 13 is eight.

Here, the optical relay system 10 is compared with the optical relay system 50.

In the optical relay system 50, the number of optical devices disposed in the joint box 53 for one optical fiber pair (the downlink DL1 and the uplink UL1) is eight. In contrast, in the optical relay system 10, the number of optical devices disposed in the joint box 13 for one optical fiber pair is four. That is, in the optical relay system 10, the number of optical devices disposed in the joint box 13 can be reduced to half of that of the optical relay system 50.

Further, when an optical relay system is laid on the bottom of the sea or the like, the size of its joint box is restricted in order to reduce the size of the joint box. As a mutter of course, the number of optical devices that can be disposed in the joint box, whose size is restricted, is limited. For example, when the number of optical devices disposed in the joint box is limited to eight, only two optical fivers (only one optical fiber pair) can be connected to the optical relay system 50. In contrast, as shown in Fig. 3, at the maximum, four optical fibers (two optical fiber pairs) can be connected to the optical relay system 10. That is, compared to the optical relay system 50, the number of optical fibers that can be connected to the optical relay system can be doubled in number.

It is necessary to reduce the size of a joint box of an optical relay system in order to lay the joint box on the bottom of the sea. Accordingly, in the optical relay system 10 according to the first example embodiment, it is possible to increase the number of optical fibers housed inside the joint box 13 by changing the arrangement (the disposition) of the optical devices such as the optical couplers and the equalizing filters, and thereby to increase the number of optical fibers that can be connected to the repeater or the joint box. As a result, it is possible to provide an optical relay system capable of increasing the number of optical fibers.

Further, since the number of optical fibers can be increased by using the optical relay system 10, the optical submarine communication system can be extended.

Features of the optical relay system 10 according to the first example embodiment are described hereinafter.

In the first example embodiment, passive devices such as equalizing filters are disposed inside the joint box for connecting submarine cables to each other. Further, optical couplers are disposed inside the joint ring of the repeater.

For example, in the downlink DL1, the optical coupler 111 that divides an optical signal into the C- and L-bands is disposed inside the joint ring 113 connected to the joint box 13. Further, the optical coupler 121 that multiplexes the C- and L-bands is disposed inside the joint ring 123 connected to the joint box 13.

In the uplink UL1, the optical coupler 122 that divides an optical signal into the C- and L-bands is disposed inside the joint ring 123 connected to the joint box 13. Further, the optical coupler 112 that multiplexes the C- and L-bands is disposed inside the joint ring 113 connected to the joint box 13.

By the above-described arrangement, the number of optical devices disposed inside the joint box 13, which may be, for example, a factory joint or a universal joint, can be reduced. Further, by the above-described arrangement, the number of optical fibers housed inside the joint box 13 can be increased.

Further, it is possible to increase the number of optical fibers that can be disposed in the joint boxes and the repeaters, which are laid on the bottom of the sea, without increasing the numbers of joint boxes and repeaters.

### [Second Example Embodiment]

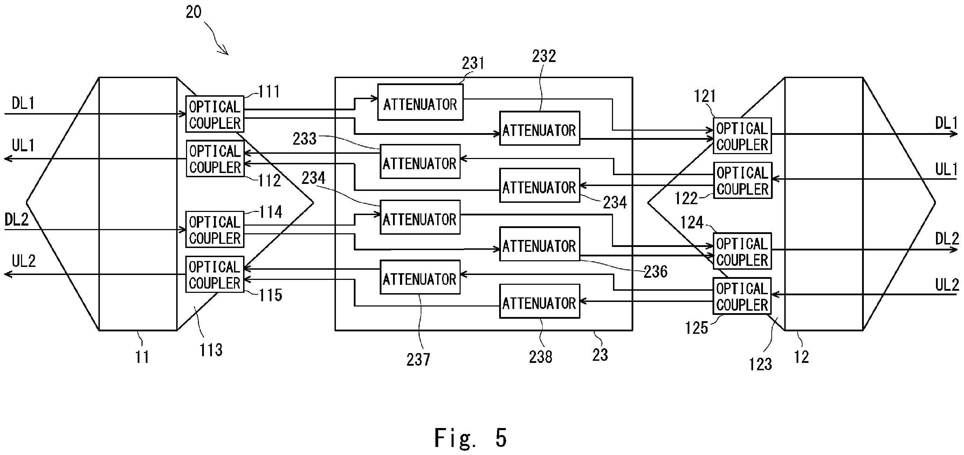

Fig. 5 is a block diagram showing an example of an optical relay system according to a second example embodiment.

As shown in Fig. 5, an optical relay system 20 according the second example embodiment differs from the optical relay system 10 shown in Fig. 3 because attenuators are disposed in place of the equalizing filters.

As explained in the first example embodiment, there is a variation (i.e., a difference) between a strength of an optical signal in the C-band and that in the L-band. Therefore, the strength of the optical signal in each of the C- and L-bands is attenuated and adjusted to a predetermined value by using an attenuator. Specifically, similarly to the above-described example where the equalizing filter is used, after an optical signal is divided into the C- and L-bands, the strengths of the optical signals are attenuated and adjusted to the predetermined value by using attenuators.

The optical relay system 20 includes a repeater 11, a joint box 23, and a repeater 12.

Similarly to the optical relay system 10, in the downlink DL1, the repeater 11 includes an optical coupler 111 that divides an optical signal into the C- and L-bands. The joint box 23 is connected to the repeater 11 and includes an attenuator 231 that attenuates the optical signal in the C-band and an attenuator 232 that attenuates the optical signal in the L-band. The repeater 12 is connected to the joint box 23 and includes an optical coupler 121 that multiplexes the attenuated optical signal in the C-band and the attenuated optical signal in the L-band.

The optical coupler 111 is disposed inside the joint ring 113 connected to the joint box 13 and the optical coupler 121 is disposed inside the joint ring 123 connected to the joint box 13.

In the uplink UL1, the joint box 23 includes an attenuator 233 and an attenuator 234. The attenuator 233 attenuates the divided optical signal in the L-band and the attenuator 234 attenuates the divided optical signal in the C-band. In this way, it is possible to adjust the strength of the optical signal in each of the C- and L-bands in a balanced manner.

Note that the attenuators 233 and 234 are disposed in the joint box 23 together with the attenuators 231 and 232. Further, since the downlink DL2 is similar to the downlink DL1 and the uplink UL2 is similar to the uplink UL1, their detailed descriptions are omitted.

In the optical relay system 20 according to the second example embodiment, it is possible to increase the number of optical fibers housed inside the joint box by disposing the optical couplers inside the joint ring and disposing the attenuators in the joint box, and thereby to increase the number of optical fibers that can be connected to the repeater or the joint box.

Note that the attenuator 231 may also be referred to as a first attenuator and the attenuator 232 may also be referred to as a second attenuator.

### [Third Example Embodiment]

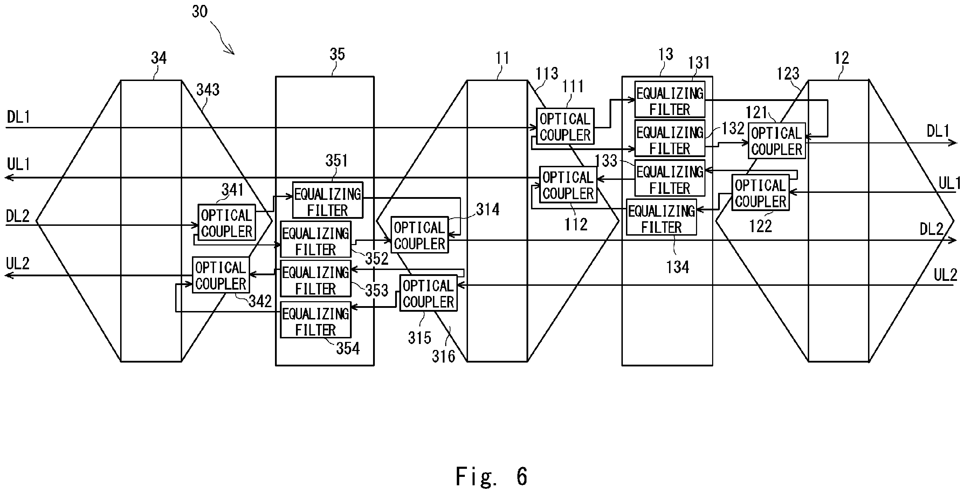

Fig. 6 is a block diagram showing an example of an optical relay system according to a third example embodiment.

As shown in Fig. 6, an optical relay system 30 according the third example embodiment differs from the optical relay system 10 shown in Fig. 3 because the optical relay system 30 further includes a joint box 35 and a repeater 34. The joint box 35 is connected to the repeater 11 and the repeater 34 is connected to the joint box 35.

The arrangement of the optical devices for the downlink DL1 (i.e., the optical coupler 111, the equalizing filter 131, the equalizing filter 132, and the optical coupler 121) and the optical devices for the uplink UL1 (i.e., the optical coupler 122, the equalizing filter 133, the equalizing filter 134, and the optical coupler 112) are similar to those of the optical relay system 10. Therefore, their descriptions are omitted.

The repeater 34 includes a joint ring 343. Further, an optical coupler 341 that divides an optical signal in the downlink DL2 into the C- and L-bands is disposed in the joint ring 343. The joint box 35 is connected to the repeater 11 and the repeater 34. Further, an equalizing filter 351 that equalizes the divided optical signal in the C-band and an equalizing filter 352 that equalizes the divided optical signal in the L-band are disposed in the joint box 35. An optical coupler 314 that multiplexes the equalized optical signal in the C-band and the equalized optical signal in the L-band is disposed in a joint ring 316 of the repeater 11.

Further, an optical coupler 315 that divides an optical signal in the uplink UL2 into the C- and L-bands is disposed in the joint ring 316 of the repeater 11. An equalizing filter 353 that equalizes the divided optical signal in the L-band and an equalizing filter 354 that equalizes the divided optical signal in the C-band are disposed in the joint box 35. An optical coupler 342 that multiplexes the equalized optical signal in the C-band and the equalized optical signal in the L-band is disposed in the joint ring 343 of the repeater 34.

Further, attenuators may be disposed in place of the equalizing filters in the optical relay system 30.

In the optical relay system 30 according to the third example embodiment, four optical devices (i.e., the equalizing filters 351 to 354) are disposed in the joint box 35 and four optical devices (i.e., the equalizing filters 131 to 134) are disposed in the joint box 13. Further, two optical devices (i.e., the optical couplers 341 and 342) are disposed in the joint ring 343 and two optical devices (i.e., the optical couplers 314 and 315) are disposed in the joint ring 316. Further, two optical devices (i.e., the optical couplers 111 and 112) are disposed in the joint ring 113 and two optical devices (i.e., the optical couplers 121 and 122) are disposed in the joint ring 123.

In this way, the optical relay system 30 can house two optical fiber pairs.

Note that the repeater 34 may also be referred to as a third repeater and the joint box 35 may also be referred to as another joint box. An optical signal in the downlink DL2 may also be referred to as another optical signal. The optical coupler 341 may also be referred to as a third optical coupler and the optical coupler 314 may also be referred to as a fourth optical coupler. The equalizing filter 351 may also be referred to as a third equalizing filter and the equalizing filter 352 may also be referred to as a fourth equalizing filter.

Further, an optical submarine communication system is described as an example in each of the above-described example embodiments. The present invention is not limited to this example. That is, the present invention may be applied to other types of apparatus in which the size of the apparatus is restricted and the number of devices disposed in the apparatus is restricted.

Note that the present invention is not limited to the above-described embodiments and can be modified as appropriate without departing from the spirit and scope of the present invention.

Although the present invention is explained above with reference to embodiments, the present invention is not limited to the above-described embodiments. Various modifications that can be understood by those skilled in the art can be made to the configuration and details of the present invention within the scope of the invention.

This application is based upon and claims the benefit of priority from Japanese patent applications No. 2017-030786, filed on February 22, 2017, the disclosure of which is incorporated herein in its entirety by reference.

### Reference Signs List

- 10, 20, 30, 50: OPTICAL RELAY SYSTEM
- 11, 12, 34: REPEATER
- 13, 35: JOINT BOX
- 111, 112, 121, 122, 314, 315, 341, 342: OPTICAL COUPLER
- 131-134, 351-354: EQUALIZING FILTER
- 113, 123, 316, 343: JOINT RING
- 231-234: ATTENUATOR
- DL, DL1, DL2: DOWNLINK
- UL, UL1, UL2: UPLINK
- P1, P2, P3, P4, P5, P6: POINT
- Ps: INTENSITY
- λ: WAVELENGTH

## Claims

1. An optical relay system comprising:
a first repeater comprising a first optical coupler configured to divide an optical signal into an optical signal in a first wavelength band and an optical signal in a second wavelength band;
a joint box connected to the first repeater and comprising a first equalizing filter configured to equalize the optical signal in the first wavelength band and a second equalizing filter configured to equalize the optical signal in the second wavelength band; and
a second repeater connected to the joint box and comprising a second optical coupler configured to multiplex the equalized optical signal in the first wavelength band and the equalized optical signal in the second wavelength band.

2. The optical relay system according to Claim 1, wherein the first wavelength band is a C-band and the second wavelength band is an L-band.

3. The optical relay system according to Claim 1 or 2, wherein the first repeater comprises a first joint ring connected to the joint box, and the first optical coupler is disposed inside the first joint ring.

4. The optical relay system according to any one of Claims 1 to 3, wherein the second repeater comprises a second joint ring connected to the joint box, and the second optical coupler is disposed inside the second joint ring.

5. The optical relay system according to any one of Claims 1 to 4, further comprising:
a third repeater comprising a third optical coupler configured to divide another optical signal into another optical signal in the first wavelength band and another optical signal in the second wavelength band; and
another joint box connected to the first and third repeaters and comprising a third equalizing filter configured to equalize the other optical signal in the first wavelength band and a fourth equalizing filter configured to equalize the other optical signal in the second wavelength band, wherein
the first repeater comprises a fourth optical coupler configured to multiplex the equalized other optical signal in the first wavelength band and the equalized other optical signal in the second wavelength band.

6. An optical relay system comprising:
a first repeater comprising a first optical coupler configured to divide an optical signal into an optical signal in a first wavelength band and an optical signal in a second wavelength band;
a joint box connected to the first repeater and comprising a first attenuator configured to attenuate the optical signal in the first wavelength band and a second attenuator configured to attenuate the optical signal in the second wavelength band; and
a second repeater connected to the joint box and comprising a second optical coupler configured to multiplex the attenuated optical signal in the first wavelength band and the attenuated optical signal in the second wavelength band.

7. The optical relay system according to Claim 6, wherein the first wavelength band is a C-band and the second wavelength band is an L-band.

8. The optical relay system according to Claim 6 or 7, wherein the first repeater comprises a first joint ring connected to the joint box, and the first optical coupler is disposed inside the first joint ring.

9. The optical relay system according to any one of Claims 6 to 8, wherein the second repeater comprises a second joint ring connected to the joint box, and the second optical coupler is disposed inside the second joint ring.

10. The optical relay system according to any one of Claims 6 to 9, further comprising:
a third repeater comprising a third optical coupler configured to divide another optical signal into another optical signal in the first wavelength band and another optical signal in the second wavelength band; and
another joint box connected to the first and third repeaters and comprising a third attenuator configured to attenuate the other optical signal in the first wavelength band and a fourth attenuator configured to attenuate the other optical signal in the second wavelength band, wherein
the first repeater comprises a fourth optical coupler configured to multiplex the attenuate other optical signal in the first wavelength band and the attenuated other optical signal in the second wavelength band.
